# EUROPEAN PATENT SPECIFICATION

(11) **EP 2 642 332 B1**
(45) Date of publication and mention of the grant of the patent: **06.05.2015**
(21) Application number: 12305342.3
(22) Date of filing: 23.03.2012
(51) Int. Cl.: G02C 7/02, G02C 7/06

(54) **A progressive addition lens for a wearer**
Progressive Linse für einen Brillenträger
Lentille d'addition progressive destinée à un porteur

(43) Date of publication of application: 25.09.2013
(73) Proprietor: Essilor International (Compagnie Générale d'Optique), 94220 CHARENTON LE PONT (FR)
(72) Inventor: Tessieres, Mélanie, 94220 CHARENTON LE PONT (FR); Bruno, Fermigier, 94220 CHARENTON LE PONT (FR); Chene, Sylvain, 94220 CHARENTON LE PONT (FR); Mouallem, Wissam, 94220 CHARENTON LE PONT (FR)
(74) Representative: Cabinet Plasseraud

(56) References cited:
- EP-A2- 1 262 815
- WO-A1-2004/107024
- WO-A1-2009/141509
- WO-A2-2007/141788
- WO-A2-2007/146265

## Description

The present invention relates to a method of determining a progressive addition lens according to claim 1 and a manufacturing method of such progressive addition lens according to claim 4.

Progressive addition lenses have been used for many years to correct an ametropy of a wearer in a manner that is suited both to far vision and near vision. For this, the lens has optical power values that are variable along a meridian line, between a reference direction for far vision and a reference direction for near vision. The optical power values for these two reference directions are determined from a prescription which is prepared for the wearer. Usually, the prescription indicates an optical power value for far vision and an addition value. The optical power value of the lens that is appropriate to the wearer to correct his sight in near vision conditions is equal to the sum of the optical power value which is prescribed for far vision and the prescribed addition value. The lens which is supplied to the wearer is produced in such a way as to produce substantially the optical power value which is thus calculated for near vision and the optical power value which is prescribed for far vision, respectively for the two reference directions for near vision and for far vision.

It is known that a progressive addition lens exhibits, in a manner which is inherent in its principle, an unintentional astigmatism.

According to the design of the surfaces of the optical lens the unintentional astigmatism may be distributed in lateral regions of the lens, so as to interfere with the vision of the wearer as little as possible. This distribution of the unintentional astigmatism can be performed by favoring a wide channel without astigmatism, between the reference directions for the far and near visions. However, the unintentional astigmatism is then greater towards the lateral edges of the lens. Alternatively, a channel without astigmatism which is narrow makes it possible to reduce the unintentional astigmatism values in the lateral regions of the lens.

The unintentional astigmatism may cause difficulty for the wearer to adapt to new progressive addition lenses and may cause optical aberrations when using such progressive optical lenses.

Thus, there is a need for progressive addition lens that presents less unintentional astigmatism than the existing progressive optical lens.
A lens design with high MTF is known from EP1262815.
A lens designs optimizing MTF for Extended Depth of Focus is known from WO2007/141788.

A goal of the present invention is to have a method according to claim 1 or claim 4 to provide a progressive addition lens to a wearer which has a reduced unintentional astigmatism.

In accordance with a first aspect of the invention there is provided a method for determining a progressive addition lens for a wearer, the optical lens having an addition lower by at least 0.5 diopter to the prescribed addition value of the wearer, wherein for a pupil diameter of at least 4 mm the modulation transfer function differs from zero over the range of spatial frequency comprised between 0 and 20 cycles per degree.

The progressive addition lens has an addition lower than the prescribed addition value.

Thus, the progressive addition lens presents less unintentional astigmatism than an progressive addition lens that has an addition equal to the prescribe addition.

Furthermore, the progressive addition lens presents a depth of focus greater than common progressive optical lenses. Thus, although the progressive addition lens according to the invention has an addition lower than the prescribed addition the optical effect for the wearer is close to the optical effect of a progressive addition lens having the prescribed addition.

Finally, a progressive addition lens provides an optical effect to the wearer close to the optical effect of a common progressive addition lens but having an addition value lower than the prescribed value, the progressive addition lens according to the invention presents less unintentional astigmatism.

The invention also relates to a manufacturing process for manufacturing a progressive addition lens using a manufacturing device comprising the steps of:
- providing a lens blank,
- blocking the lens blank,
- surfacing the surfaces of the lens blank as determined according to the invention.

The invention further relates to a computer program product for a data processing device, the computer program product comprising a set of instructions which, when loaded into the data processing device, causes the data processing device to perform the method according to the invention.

The invention also relates to a computer-readable medium having computer-executable instructions to enable a computer system to perform the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Embodiments of the invention will now be described, by way of example only, and with reference to the following drawings in which:
- Figures 1a and 1b represent optical characteristic of two progressive addition lens;
- Figures 2a to 2b compare the modulation transfer functions of a prior art progressive addition lens and a progressive addition lens according to the invention;
- Figure 3 illustrate the step of a process according to the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

A progressive addition lens for a wearer designed with a method according to the invention has an addition value lower than the prescribed addition value of the wearer.

According to an embodiment of the invention, the progressive addition lens comprises a first vision zone, a near vision zone and an intermediate corridor.

The first vision zone corresponds to the portion of the progressive addition lens having a dioptric power for a first distance vision.

According to an embodiment of the invention the first distance vision is a far distance vision. The far vision zone is the zone of the lens that surrounds the far vision point, and within which the local optical characteristics of optical power and of astigmatism of the lens are substantially identical to those at the far vision point. The far vision point is the point of a surface of a progressive addition lens through which the sight of the wearer passes when said wearer looks at infinity and where the values of the Sphere, cylinder and Axe correspond to the wearer's prescription for far vision.

According to an embodiment of the invention the first distance vision is an intermediate distance vision. The intermediate vision zone is the zone of the lens that surrounds the intermediate vision point, and within which the local optical characteristics of optical power and of astigmatism of the lens are substantially identical to those at the intermediate vision point. The intermediate vision point is the point of a surface of a progressive addition lens through which the sight of the wearer passes when said wearer looks at an intermediate distance between infinity and reading distance and where the values of the Sphere, cylinder and Axe correspond to the wearer's prescription for intermediate vision.

The near vision zone corresponds to the portion of the progressive optical lens for near distance vision. The near vision zone is the zone of the lens that surrounds the near vision point, and within which the local optical characteristics of optical power and of astigmatism of the lens are substantially identical to those of the near vision point. Near vision point is the point of a surface of a progressive addition lens through which the sight of the wearer passes when said wearer is in a reading position.

The intermediate corridor corresponds to the portion of the progressive optical lens providing clear vision for ranges intermediates between the first distance and the near distance.

According to the invention, the difference between the addition value of the progressive addition lens according to the invention and the prescribed addition value is greater or equal to 0,5 diopter, for example greater or equal to 1 diopter.

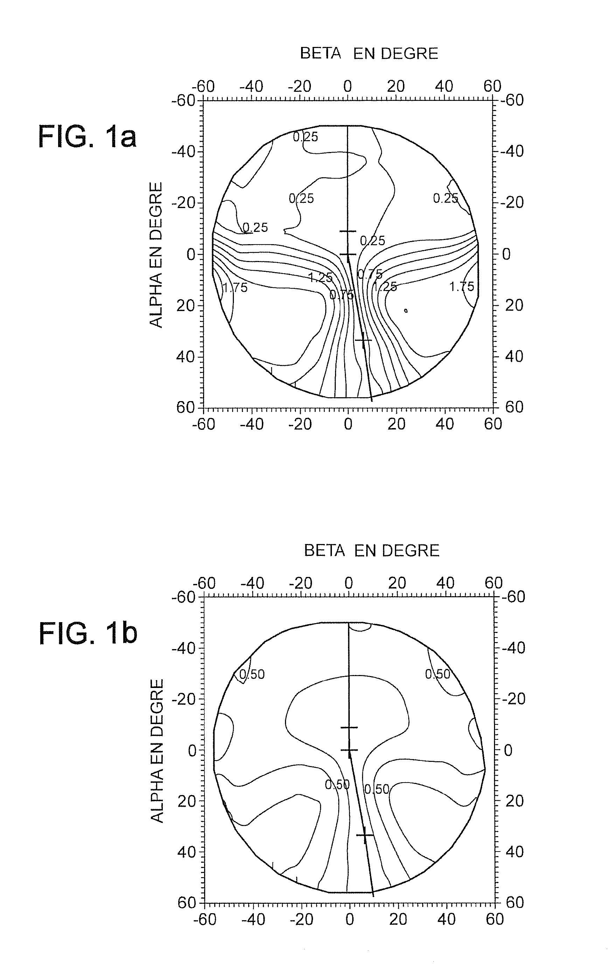

Figures 1a and 1b show lines of equal astigmatism, i.e. lines formed by points for which astigmatism has an identical value. The difference in astigmatism is 0.25 between two adjacent lines on figure 1a and 1b.

The progressive addition lens represented on figure 1a has an addition value of 2 diopters and the progressive addition lens represented on figure 1b has an addition value of 1 diopter.

As one can see when comparing figures 1a and 1b, a progressive optical lens having an addition of 2 diopters, as represented on figure 1a, presents much greater unintentional astigmatism than a progressive addition lens having an addition of 1 diopter as represented on figure 1b. Indeed, the lines of equal astigmatism are much closer on figure 1a than on figure 1b.

Thus, reducing the addition value of a progressive addition lens reduces the unintentional astigmatism.

Therefore, by providing a progressive addition lens having a addition value lower than the prescribed addition value to a wearer, the invention reduces the unintentional astigmatism of the provided progressive addition lens.

In order to compensate for the reduced value of addition, the inventors propose to provide an increase depth of focus to the lens.

According to the invention, the progressive addition lens is arranged so that the modulation transfer function measured for spatial frequency comprised between 0 and 20 cycles per degree and with a pupil diameter of 4 mm is different from zero, for example greater than or equal to 0.1.

The modulation transfer function can be determined by any known process. For example, the modulation transfer function can be measured by using the image of a grid pattern of alternate black and white lines trough the progressive addition lens.

The increase depth of focus can be obtained by any known method.

According to an embodiment of the invention, the progressive addition lens comprises at least in the near vision zone a phase modulation mask configured for modifying the phase of the light. The phase modulation mask may be configured so as to provide optical power.

According to an embodiment of the invention, at least one of the surfaces of the progressive addition lens comprises geometrical aberrations. Such geometrical aberrations are determined so as to increase the depth of focus of the progressive addition lens.

Methods for determining the geometrical aberrations and/or the phase modulation mask so as to increase the depth of focus are well known of the skilled person. Such geometrical aberration can be determined using an optimization method using a cost function that maximizes the modulation transfer function in a range of spatial frequency and for predefined viewing distances.

Among the well known optimization methods, the conjugate gradient method or the quasi-Newton methods can be used.

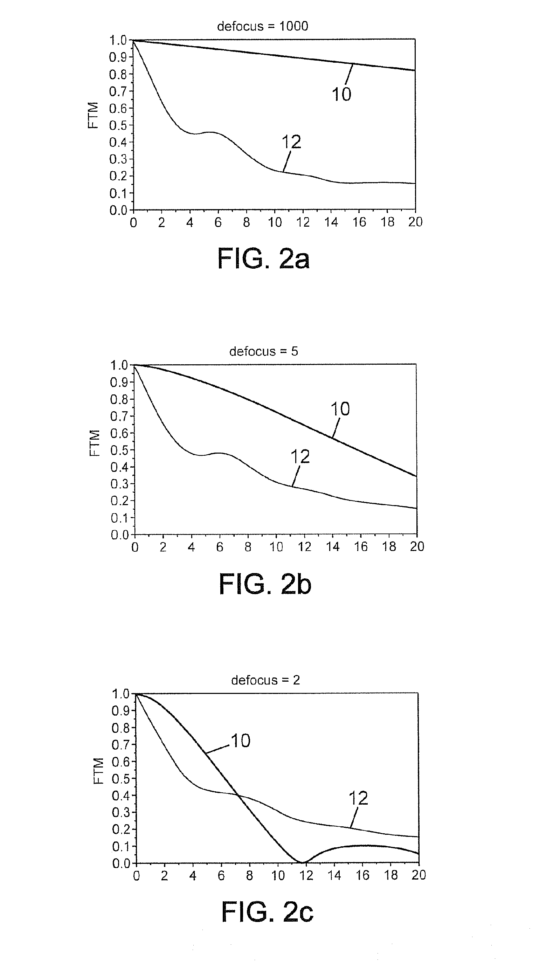

Figures 2a to 2f represent modulation transfer functions 10 of a prior art progressive addition lens having an addition value of 2 diopters and modulation transfer functions 12 of a progressive addition lens according to the invention. The progressive addition lens according to the invention has an addition value of 1 diopter.

The modulation transfer functions are measured for a pupil diameter of 4 mm and over a range of spatial frequency comprised between 0 and 20 cycles per degree.

Figures 2a to 2f represent the modulation transfer functions measured in plans situated at different distances.

Figure 2a is the modulation transfer functions measured at 1000 m.

Figure 2b is the modulation transfer functions measured at 5 m.

Figure 2c is the modulation transfer functions measured at 2 m.

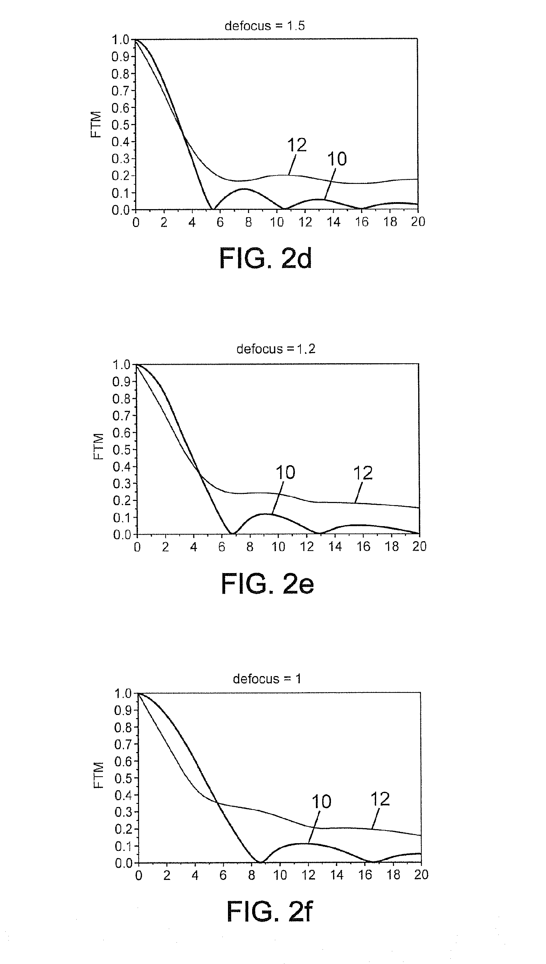

Figure 2d is the modulation transfer functions measured at 1.5 m.

Figure 2e is the modulation transfer functions measured at 1.2 m.

Figure 2f is the modulation transfer functions measured at 1 m.

As illustrated by figures 2a to 2f, the modulation transfer function 12 of the progressive addition lens according to the invention does not drop below 0.1. In fact, the inventors have measured that the lower value of modulation transfer function for the progressive addition lens according to the invention is 0.123.

Whereas the modulation transfer function 10 of the prior art progressive addition lens drops at zero for plan between 2m and 1 m. In other words, the wearer can not distinct two lines of a grid pattern of alternate black and white lines when the grid is situated between 1m and 2m for a spatial frequency of the grid greater than about 6 cycles per degree.

Finally, as illustrated when comparing figures 2a to 2f it appears that although the modulation transfer functions of the progressive addition lens according to the invention are lower than the modulation transfer function of the prior art progressive addition lens at distance larger than 5m, at close distances, i.e. below 2 m, the modulation transfer functions 12 of the progressive addition lens according to the invention is greater than the prior art progressive addition lens.

Overall the progressive addition lens according to the invention presents less unintentional astigmatism, due to the lower addition value, and allows the wearer to see clearly at any distance between 0.5 m and 1000m.

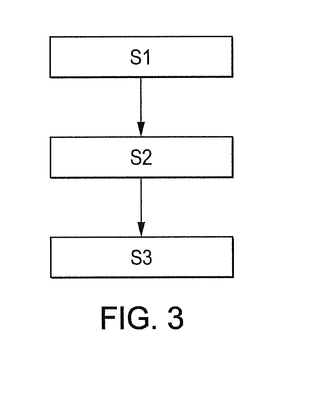

As illustrated on figure 3, the invention further relates to a process implemented by computer means for determining the optical surfaces of a progressive addition lens for a wearer, the method comprising:
- a prescription data providing step S1,
- an optical function determining S2, and
- a surface determining step S3,

During the prescription data providing step S1, prescription data of the wearer comprising the prescribed addition are provided.

During the optical function determining step S2 an optical function according to the prescription data is determined.

The optical function corresponds to a virtual progressive lens having:
- a first vision zone corresponding to the portion of the progressive addition lens having the dioptric power for the first distance vision corresponding to the prescription data,
- an addition between the first vision zone and the near vision smaller in absolute value than the addition of the prescription data, and
- for a pupil diameter of 4 mm the modulation transfer function differs from zero over the range of spatial frequency comprised between 0 and 20 cycles per degree.

According to an embodiment of the invention, during the optical function determining step, geometrical aberrations are added to the virtual progressive lens so as to increase the depth of focus in the near vision zone.

According to an embodiment of the invention, the process further comprises a phase modulation mask determining step.

During this phase modulation mask determining step a phase modulation mask to be added at least in the near vision zone of optical lens so as to increase the depth of focus in the near vision zone is determined.

During the surface determining step S3 the surfaces of an optical lens having the previously determined optical function are determined.

The progressive addition lens according to the invention can be manufactured according to a manufacturing process using a manufacturing device comprising the steps of:
- providing a lens blank,
- blocking the lens blank,
- surfacing the surfaces of the lens blank as determined according to the process of the invention.

Many further modifications and variations will suggest themselves to those versed in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A process implemented by computer means for determining the optical surfaces of a progressive addition lens for a wearer, the method comprising:
- a prescription data providing step during which prescription data of the wearer comprising the prescribed addition are provided,
- an optical function determining step during which an optical function according to the prescription data is determined, and
- a surface determining step during which the surfaces of an optical lens having the previously determined optical function are determined,
wherein the optical function corresponds to a virtual progressive lens having :
- a first vision zone corresponding to the portion of the progressive addition lens having the dioptric power for the first distance vision corresponding to the prescription data,
- a near vision zone corresponding to the portion of the progressive addition lens for near distance vision,
- a intermediate corridor corresponding to the portion of the progressive addition lens providing clear vision for ranges intermediates between the first distance and the near distance, wherein the first vision zone is a far vision zone or an intermediate vision zone,
- an addition between the first vision zone and the near vision smaller by at least 0.5 diopter in absolute value than the addition of the prescription data, and
- wherein for a pupil diameter of 4 mm the modulation transfer function is greater or equal to 0.1 over the range of spatial frequency comprised between 0 and 20 cycles per degree when measured at distances comprised between 0.5 m and 1000 m; and comprising a step so as to increase the depth of focus in the near vision zone chosen within the list consisting of:
• during the optical function determining step, geometrical aberrations are added to the virtual progressive lens so as to increase the depth of focus in the near vision zone;
• the process further comprises a phase modulation mask determining step during which a phase modulation mask to be added at least in the near vision zone of optical lens so as to increase the depth of focus in the near vision zone is determined.

2. Process according to claim 1 wherein the addition of the optical lens is lower by at least 1 diopter to the prescribed addition of the wearer.

3. Process according to claim 1 or to claim 2 wherein for a pupil diameter of 4 mm the modulation transfer function differs from zero is greater or equal to 0.1 over the range of spatial frequency comprised between 0 and 20 cycles per degree when measured at distances comprised between 0.5 m and 1000 m.

4. Manufacturing process for manufacturing a progressive addition lens using a manufacturing device comprising the steps of:
- providing a lens blank,
- blocking the lens blank,
- surfacing the surfaces of the lens blank as determined according to the process of claims 1 to 3.

5. A computer program product for a data-processing device, the computer program product comprising a set of instructions which, when loaded into the data-processing device, causes the device to perform the steps of the processes as claimed in claim 1 to3.

6. A computer-readable medium carrying the sequences of instructions of the computer program product of claim 5.

## Patentansprüche

1. Computer-ausgeführter Prozess zum Bestimmen der optischen Oberflächen eines Gleitsichtglases für einen Träger, wobei das Verfahren die folgenden Schritte umfasst:
- einen Schritt zum Bereitstellen der Rezeptdaten, in dem Rezeptdaten für den Träger, umfassend die verschriebene Addition, bereitgestellt werden,
- einen Schritt zum Bestimmen einer optischen Funktion, in dem eine optische Funktion gemäß den Rezeptdaten bestimmt wird, und
- einen Schritt zum Bestimmen einer Oberfläche, in dem die Oberflächen einer optischen Linse, die die zuvor bestimmte optische Funktion aufweisen bestimmt werden,
- wobei die optische Funktion einem virtuellen Gleitsichtglas entspricht, das Folgendes aufweist:
- eine erste Sichtzone, die dem Anteil des Gleitsichtglases, der die Brechkraft für die erste, den Rezeptdaten entsprechende Fernsicht aufweist, entspricht,
- eine Nahsichtzone, die dem Anteil des Gleitsichtglases für die Nahsicht entspricht,
- einen Mitteldistanzkorridor, der dem Anteil des Gleitsichtglases, der gute Sicht für Bereiche zwischen der ersten Distanz und der Nahdistanz bereitstellt, entspricht, wobei die erste Sichtzone eine Fernsichtszone oder eine Mitteldistanzsichtzone ist,
- eine Addition zwischen der ersten Sichtzone und der Nahsichtzone, die um mindestens 0,5 Dioptrien absolut kleiner als die Addition der Rezeptdaten ist, und
- wobei, bei einem Pupillendurchmesser von 4 mm, die Modulationsübertragungsfunktion größer gleich 0,1 über dem Bereich von Ortsfrequenzen, die zwischen 0 und 20 Zyklen pro Grad, gemessen bei Distanzen zwischen 0,5 m und 1000 m, liegen, ist;
und umfassend einen Schritt zum Erhöhen der Abbildungstiefe in der Nahsichtzone, ausgewählt aus der Liste, die aus Folgenden besteht:
• dem virtuellen Gleitsichtglas werden während des Schritts zum Bestimmen der optischen Funktion geometrische Abbildungsfehler hinzugefügt, sodass die Abbildungstiefe in der Nahsichtzone erhöht wird;
• der Prozess umfasst ferner einen Schritt zum Bestimmen einer Phasenmodulationsmaske, in dem eine Phasenmodulationsmaske, die zumindest in der Nahsichtzone der optischen Linse hinzuzufügen ist, bestimmt wird, sodass die Abbildungstiefe in der Nahsichtzone erhöht wird.

2. Prozess nach Anspruch 1, wobei die Addition der optischen Linse um mindestens 1 Dioptrie niedriger als die verschriebene Addition des Trägers ist.

3. Prozess nach Anspruch 1 oder Anspruch 2, wobei, bei einem Pupillendurchmesser von 4 mm, die Modulationsübertragungsfunktion ungleich null und größer gleich 0,1 über dem Bereich von Ortsfrequenzen, die zwischen 0 und 20 Zyklen pro Grad, gemessen bei Distanzen zwischen 0,5 m und 1000 m, liegen, ist.

4. Herstellungsprozess zum Herstellen eines Gleitsichtglases mittels einer Herstellungsvorrichtung, wobei der Herstellungsprozess die folgenden Schritte umfasst:
- Bereitstellen eines Linsenrohlings,
- Aufkitten des Linsenrohlings,
- Flächenbehandeln der Oberflächen des Linsenrohlings, wie es gemäß dem Prozess nach Ansprüchen 1 bis 3 bestimmt wird.

5. Computerprogrammprodukt für eine Datenverarbeitungsvorrichtung, wobei das Computerprogrammprodukt einen Satz von Befehlen umfasst, der, wenn er auf die Datenverarbeitungsvorrichtung geladen wird, die Vorrichtung dazu bringt, die Schritte des Prozesses nach Ansprüchen 1 bis 3 auszuführen.

6. Computerlesbarer Datenträger, umfassend die Abfolgen von Befehlen des Computerprogrammprodukts nach Anspruch 5.

## Revendications

1. Procédé mis en oeuvre par un moyen informatique pour déterminer les surfaces optiques d'une lentille d'addition progressive pour un porteur, le procédé comprenant :
- une étape de fourniture de données de prescription pendant laquelle des données de prescription du porteur comprenant l'addition prescription sont fournies,
- une étape de détermination de fonction optique pendant laquelle une fonction optique en accord avec les données de prescription est déterminée, et
- une étape de détermination de surfaces pendant laquelle les surfaces d'une lentille optique ayant la fonction optique préalablement déterminée sont déterminées,
dans lequel la fonction optique correspond à une lentille progressive virtuelle ayant :
- une première zone de vision correspondant à la portion de la lentille d'addition progressive ayant la puissance dioptrique pour la vision à la première distance correspondant aux données de prescription,
- une zone de vision de près correspondant à la portion de la lentille d'addition progressive pour la vision à distance rapprochée,
- un corridor intermédiaire correspondant à la portion de la lentille d'addition progressive fournissant une vision nette pour des gammes intermédiaires entre la première distance et la distance rapprochée, la première zone de vision étant une zone de vision de loin ou une zone de vision intermédiaire,
- une addition entre la première zone de vision et la zone de vision de près inférieure d'au moins 0,5 dioptre en valeur absolue à l'addition des données de prescription, et
- dans lequel pour un diamètre de pupille de 4 mm la fonction de transfert de modulation est supérieure ou égale à 0,1 sur la gamme de fréquence spatiale comprise entre 0 et 20 cycles par degré lorsqu'elle est mesurée à des distances comprises entre 0,5 m et 1000 m ;
et comprenant une étape visant à augmenter la profondeur de foyer dans la zone de vision de près choisie dans la liste constituée par :
• pendant l'étape de détermination de fonction optique, des aberrations géométriques sont ajoutées à la lentille progressive virtuelle de manière à augmenter la profondeur de foyer dans la zone de vision de près ;
• le procédé comprend en outre une étape de détermination de masque de modulation de phase pendant laquelle un masque de modulation de phase à ajouter au moins dans la zone de vision de près de la lentille optique de manière à augmenter la profondeur de foyer dans la zone de vision de près est déterminé.

2. Procédé selon la revendication 1 dans lequel l'addition de la lentille optique est inférieure d'au moins 1 dioptre à l'addition prescrite du porteur.

3. Procédé selon la revendication 1 ou la revendication 2 dans lequel pour un diamètre de pupille de 4 mm la fonction de transfert de modulation diffère de zéro et est supérieure à égale à 0,1 sur la gamme de fréquence spatiale comprise entre 0 et 20 cycles par degré lorsqu'elle est mesurée à des distances comprises entre 0,5 m et 1000 m.

4. Procédé de fabrication pour la fabrication d'une lentille d'addition progressive à l'aide d'un dispositif de fabrication comprenant les étapes consistant à :
- se procurer une ébauche de lentille,
- bloquer l'ébauche de lentille,
- surfacer les surfaces de l'ébauche de lentille comme déterminé selon le procédé des revendications 1 à 3.

5. Produit-programme informatique pour un dispositif de traitement de données, le produit-programme informatique comprenant un jeu d'instructions qui, lorsqu'il est chargé dans le dispositif de traitement de données, amène le dispositif à effectuer les étapes des procédés selon les revendications 1 à 3.

6. Support lisible par ordinateur portant les séquences d'instructions du produit-programme informatique de la revendication 5.
